# EUROPÄISCHE PATENTSCHRIFT

(11) **EP 0 344 422 B1**
(45) Veröffentlichungstag und Bekanntmachung des Hinweises auf die Patenterteilung: **23.06.1993**
(21) Anmeldenummer: 89105186.4
(22) Anmeldetag: 23.03.1989
(51) Int. Cl.: B60R 21/20

(54) **Aufprallschutzkissen für den Insassen eines Kraftfahrzeuges**
Air bag for motor vehicle passengers
Sac d'air pour les occupants d'un véhicule

(30) Priorität: 28.05.1988 DE 3818185
(43) Veröffentlichungstag der Anmeldung: 06.12.1989
(73) Patentinhaber: DAIMLER-BENZ AKTIENGESELLSCHAFT, 70327 Stuttgart (DE)
(72) Erfinder: Henseler, Wolfgang, D-7400 Tübingen (DE); Brambilla, Luigi, Dr., D-7030 Böblingen (DE); Müller, Manfred, D-7301 Deizisau (DE); Bossenmaier, Alban, D-7000 Stuttgart 1 (DE); Katz, Egon, D-7270 Nagold 7 (DE); Mast, Horst, D-7000 Stuttgart 80 (DE)

(56) Entgegenhaltungen:
- DE-A- 2 722 551

## Beschreibung

Die Erfindung betrifft ein Aufprallschutzkissen nach dem Oberbegriff des Patentanspruches 1.

Bei einem bekannten Aufprallschutzkissen dieser Art (DE-OS 27 22 551) ist ein Mittelteil vorgesehen, das zwischen zwei Seitenteilen gleicher Größe angeordnet ist. Das Mittelteil ist an seinem Rand über Verbindungsnähte mit den Seitenteilen verbunden. Das Aufprallschutzkissen ist an einem rechteckförmigen Rahmen befestigt, der wiederum an einer fahrzeugfesten Aufnahme im Bereich des Armaturenbretts angeordnet wird. An dem Mittelteil des Aufprallschutzkissens ist eine durch eine bogenförmige Reißnaht fixierte Aufreißfalte vorgesehen, durch die das Füllvolumen des Aufprallschutzkissens verkleinert wird. In der Ausgangslage befindet sich das Aufprallschutzkissen im gefalteten Zustand an der Aufnahme am Armaturenbrett. Eine mit dem Aufprallschutzkissen verbundene Füllvorrichtung besitzt mehrere nacheinander auslösbare Zündstufen, mit denen Gas verschiedener Druckstufen zuführbar ist. Bei einem Unfall kann somit abhängig von der Stärke der Verzögerung das Füllvolumen des Aufprallschutzkissens gesteuert werden. Bei einem Unfall mit niedrigen Verzögerungen entfaltet sich das Aufprallschutzkissen nur teilweise. Bei sehr starken Verzögerungen wird Gas mit sehr hohem Druck zugeführt, wodurch die Reißnaht an dem Mittelteil zerstört wird, so daß das gesamte Füllvolumen zur Verfügung steht. Während der Entfaltungsphase aus der Ruheposition am Armaturenbrett in einen der beiden Füllzustände kommt es - da die Reißnähte nur an dem Mittelteil verlaufen - im Bereich der Seitenteile des bekannten Aufprallschutzkissens zu einer starken Vorverlagerung mit hohen Vorverlagerungsgeschwindigkeiten. Dies kann zu einem Kontakt der Fahrzeuginsassen mit der Oberfläche des Schutzkissens führen, was unter Umständen Verletzungen verursachen kann. Der Erfindung liegt die Aufgabe zugrunde, ein Aufprallschutzkissen der eingangs genannten Art derart auszubilden, daß während der Entfaltungsphase die Ausdehnung und die Ausdehnungsgeschwindigkeit des Aufprallschutzkissens sowohl im Bereich des Mittelteils als auch an den Seitenteilen verringert wird.

Diese Aufgabe wird bei einem gattungsgemäßen Aufprallschutzkissen durch die kennzeichnenden Merkmale des Patentanspruches 1 gelöst. Bei dem erfindungsgemäßen Aufprallschutzkissen verbinden die Reißnähte die im Bereich der Aufreißfalte aneinanderliegenden Nähte zwischen dem Mittelteil und den Seitenteilen. Hierdurch wird eine Verringerung der Ausdehnung und der Ausdehnungsgeschwindigkeit des Aufprallschutzkissens sowohl im Bereich des Mittelteiles als auch an den Seitenteilen erzielt. Während der Entfaltungsphase des Schutzkissens wird somit ein Kontakt des Aufprallschutzkissens mit dem Insassen des Kraftfahrzeuges verhindert.

Eine einfache Ausführungsform des Erfindungsgegenstandes sieht am Mittelteil eine Aufreißfalte vor, die durch Reißnähte gebildet wird, die die im Bereich der Aufreißfalte aneinanderliegenden Verbindungsnähte zwischen dem Mittelteil und den Seitenteilen verbinden.

In einer besonders vorteilhaften Ausführungsform ist vorgesehen, daß an zwei sich gegenüberliegenden Wandbereichen des Mittelteils je eine Aufreißfalte gebildet ist. Hierdurch wird eine symmetrische Entfaltungscharakteristik des Aufprallschutzkissens erzielt.

Die Reißnähte können auch unsymmetrisch angelegt sein und/oder mit Fäden unterschiedlicher Reißkraft ausgeführt werden.

Bei allen Ausführungsformen des Erfindungsgegenstandes können die Reißnähte sowohl durchgehend als auch unterbrochen vernäht sein. Es ist auch möglich, die Reißnähte als Kleb- oder Schweißnähte o.dgl. auszubilden.

Ein weiterer Vorteil des erfindungsgemäßen Aufprallschutzkissens ist eine verbesserte Faltung und Faltbarkeit durch die Anordnung der Reißnähte an den Verbindungsnähten.

Vorteilhafte Ausführungsformen des erfindungsgemäßen Aufprallschutzkissens sind in der Zeichnung dargestellt und werden nachfolgend beschrieben. Es zeigen:
- Figur 1: eine schematische perspektivische Darstellung einer erfindungsgemäßen Ausführungsform im teilgefüllten Zustand,
- Figur 2: eine andere Ausführungsform in teilgefülltem Zustand
- Figur 3: eine weitere Ausführungsform im teilgefüllten Zustand.
- Figur 4: die Ausführungsformen gemäß Fig. 1 bis 3 im Endzustand.

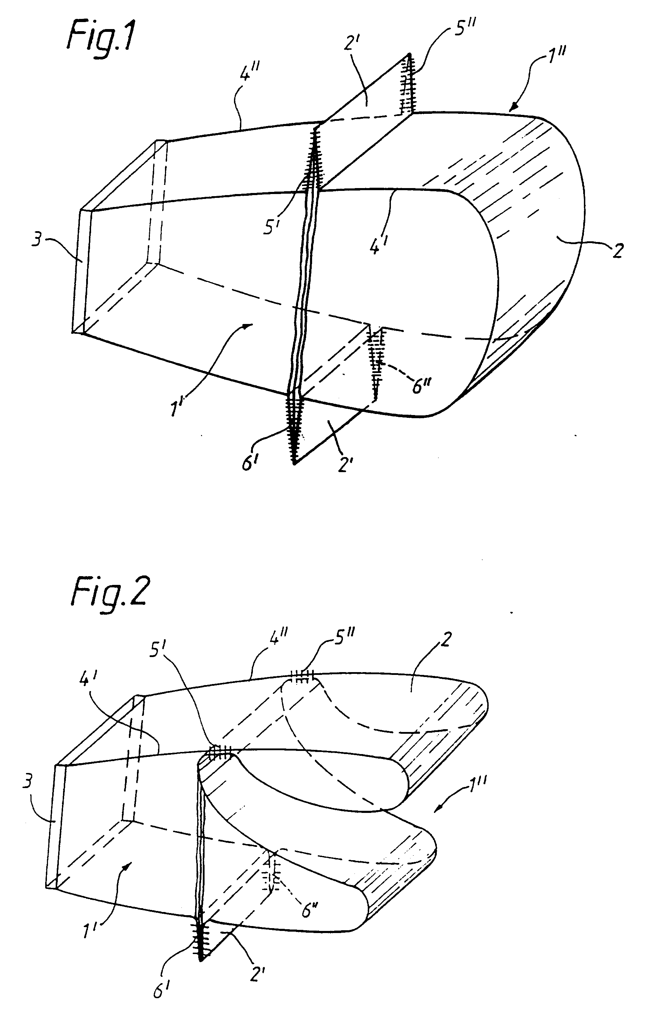

Ein Aufprallschutzkissen gemäß Figur 1 baut sich im wesentlichen aus den beiden Seitenteilen 1′, 1˝ mit gleicher Größe und einem dazwischen liegenden Mittelteil 2 auf. Das Mittelteil 2 ist mit den Seitenteilen 1′, 1˝ an Verbindungsnähten 4′, 4˝ vernäht. Zur Befestigung des Aufprallschutzkissens ist ein rechteckförmiger Rahmen vorgesehen, der im Bereich des Armaturenbrettes an einer fahrzeugfesten, in der Zeichnung nicht dargestellten Aufnahme angeordnet ist.

In der Ausgangslage liegt das Aufprallschutzkissen im gefalteten Zustand im Bereich des Rahmens 3. Bei einem Unfall, bzw. bei einer starken Verzögerung, wird eine in der Zeichnung nicht dargestellte Füllvorrichtung angesteuert, die Gas dem Aufprallschutzkissen zuführt. In Figur 1 ist das Aufprallschutzkissen im teilgefüllten Zustand dargestellt, bevor der ansteigende Aufprallschutzkissen-Innendruck die Reißnähte zerstört und das durch die Aufreißfalten 2′ verkleinerte Füllvolumen vollständig freigibt. Der Reißnaht-Widerstand der Reißnähte 5, 6 führt zu einer Entfaltungscharakteristik mit verringerter Ausdehnung und Ausdehnungsgeschwindigkeit des Aufprallschutzkissens. Da die Reißnähte 5′, 5˝, 6′, 6˝ im Bereich der Verbindungsnähte 4′,4˝ angeordnet sind, wird - weil auch die Seitenteile durch ihre kürzere Verbindungsnaht zum Mantel kürzer gehalten sind - insbesondere die Ausdehnung im Bereich der Seitenteile 1′, 1˝ verringert. Dies führt aber gleichzeitig auch im Bereich des Mittelteiles 2 zu einer reduzierten Ausdehnung. Somit tritt kein Kontakt während der Entfaltungsphase mit dem Fahrzeuginsassen auf.

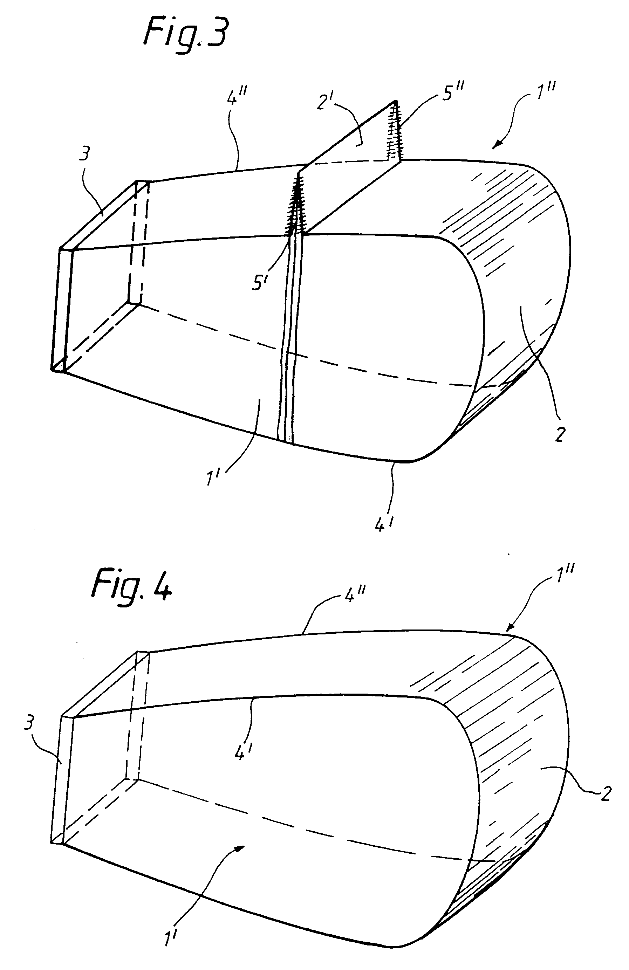

Eine andere vorteilhafte Ausführungsform zeigt Fig. 2. Das Schutzkissen ist im Bereich des Mittelteiles 2 taschenförmig gefaltet. Eine nach innen gestülpte Tasche wird durch die Reißnähte 5′, 5˝ gehalten, die an den Verbindungsnähten 4′, 4˝ vorgesehen sind. Eine nach außen gerichtete Aufreißfalte 2′ wird an den Verbindungsnähten 4′, 4˝ durch die Reißnähte 6′, 6˝ gebildet. Die Reißnähte an der Seitenwand 1˝ sind entsprechend den Reißnähten an der Seitenwand 1′ ausgebildet.

Eine einfache Ausführungsform des Erfindungsgegenstandes ist in Figur 3 dargestellt. An jeder der beiden Verbindungsnähte 4′, 4˝ ist nur eine Reißnaht 5′, 5˝ vorgesehen. Im teilgefüllten Zustand gemäß Figur 3 ist am Mittelteil 2 eine nach außen gerichtete Aufreißfalte 2′ ausgebildet.

Die Reißnähte 5, 6 können sowohl durchgehend als auch unterbrochen vernäht sein. Es ist auch möglich, statt vernähter Reißnähte Kleb- oder Schweißnähte vorzusehen. Die an den Verbindungsnähten angeordneten Reißnähte können zu einer verbesserten Faltung oder Faltbarkeit des Aufprallschutzkissens führen.

In Figur 4 sind die Aufprallschutzkissen gemäß den Figuren 1 bis 3 im Endzustand dargestellt. Dieser Zustand wurde durch Zuführung von Gas mit hohem Gasdruck bewirkt, der zu einer Zerstörung der Reißnähte 5,6 führte.

## Patentansprüche

1. Aufprallschutzkissen für den Insassen eines Kraftfahrzeuges, das mit zwei Seitenteilen (1′, 1˝) und einem zwischen den Seitenteilen angeordneten Mittelteil (2) ausgebildet ist, und das aus einer zusammengefalteten Ausgangslage an einer fahrzeugfesten Aufnahme durch Gas aufblasbar ist, wobei im Ausgangszustand das Füllvolumen durch mindestens eine in der Wandung (1′, 1˝, 2) des Aufprallschutzkissens gebildete und durch Reißnähte (5, 6) fixierte Aufreißfalte (2′) verkleinert ist, und wobei die Reißnähte (5, 6) infolge des ansteigenden Gasdruckes zerstört werden, so daß im Endzustand das gesamte Füllvolumen des Aufprallschutzkissens verfügbar ist, dadurch gekennzeichnet, daß die Reißnähte (5′, 5˝, 6′, 6˝) die im Bereich der Aufreißfalte (2′) aneinanderliegenden Verbindungsnähte (4′, 4˝) zwischen dem Mittelteil (2) und den Seitenteilen (1′, 1˝) verbinden.

2. Aufprallschutzkissen nach Anspruch 1, dadurch gekennzeichnet, daß an zwei sich gegenüberliegenden Wandbereichen des Mittelteils (2) je eine Aufreißfalte (2′) gebildet ist.

## Claims

1. Anti-collision cushion for the occupants of a motor vehicle which is constructed with two side parts (1', 1'') and a central part (2) arranged between the side parts, and which is inflatable by gas from a folded initial position on a receptacle fixed to the vehicle, the volume capacity in the initial state being reduced by at least one tearing fold (2') formed in the wall (1', 1'', 2) of the anti-collision cushion and fixed by rip seams (5, 6), and the rip seams (5, 6) being destroyed due to the rising gas pressure, so that in the final state, the entire volume capacity of the anti-collision cushion is available, characterized in that the rip seams (5', 5'', 6', 6'') connect the connecting seams (4', 4'') between the central part (2) and the side parts (1', 1'') which are contiguous in the region of the tearing fold (2').

2. Anti-collision cushion according to Claim 1, characterized in that a tearing fold (2') is formed on each of two opposite wall regions of the central part (2).

## Revendications

1. Vessie de protection anti-chocs pour les occupants d'un véhicule automobile, qui est constituée de deux parties latérales (1',1") et d'une partie centrale (2) disposée entre les parties latérales et qui peut être gonflée par un gaz à partir d'une position initiale repliée dans un réceptacle solidaire du véhicule, auquel cas, dans l'état initial, le volume de remplissage est réduit par au moins un pli de déchirement (2'), formé dans la paroi (1',1",2) de la vessie de protection anti-chocs et fixé par des joints déchirables (5,6), et ces joints déchirables (5,6) sont déchirés par suite d'une augmentation de la pression de gaz de telle sorte que, dans l'état final, tout le volume de remplissage de la vessie de protection anti-chocs soit disponible, caractérisée en ce que les joints déchirables (5',5",6',6") relient les joints de liaison (4',4"), situés l'un contre l'autre dans la zone du pli de déchirement (2'), entre la partie centrale (2) et les parties latérales (1',1").

2. Vessie de protection anti-chocs selon la revendication 1, caractérisée en ce qu'un pli de déchirement (2') est formé respectivement dans deux zones de paroi mutuellement opposées de la partie centrale (2).
